# EUROPÄISCHE PATENTANMELDUNG

(11) **EP 3 640 850 A1**
(43) Veröffentlichungstag der Anmeldung: **22.04.2020**
(21) Anmeldenummer: 18200688.2
(22) Anmeldetag: 16.10.2018
(51) Int. Cl.: G06K 19/02, G06K 19/077, D04B 1/00

(54) **RFID-SYSTEM UND VERFAHREN ZUR HERSTELLUNG EINES RFID-SYSTEMS**

(71) Anmelder: Relytex GmbH & Co. KG, 84030 Landshut Bayern (DE)
(72) Erfinder: Schumacher, Rolf, 72336 Balingen (DE); Katschke, Harald, 87766 Memmingerberg (DE)
(74) Vertreter: Ruckh, Rainer Gerhard

(57) **Zusammenfassung**

Die Erfindung betrifft ein RFID-System (1) mit einem RFID-Chip (2) und einer Sende- und/oder Empfangsantenne (3) zum Senden und/oder Empfangen von elektromagnetischen Wellen, welche auf einem Trägermaterial (4) aufgebracht sind. Die Sende- und/oder Empfangsantenne (3) ist nur von einem elektrisch leitfähigen Faden (5) gebildet, welcher eine linienförmige, kreuzungsfreie Struktur ausbildet. Ein Segment des elektrisch leitfähigen Fadens (5) umschlingt den RFID-Chip (2) berührungsfrei in einem Winkel von mindestens 180°, wodurch eine kapazitive Kopplung zwischen dem RFID-Chip (2) und der Sende- und/ oder Empfangsantenne (3) bewirkt ist. Die Erfindung betrifft weiterhin ein Verfahren zur Herstellung eines RFID-Systems (1).

## Beschreibung

Die Erfindung betrifft ein RFID-System und ein Verfahren zur Herstellung eines RFID-Systems.

Derartige RFID-Systeme werden insbesondere als Identifikationssysteme eingesetzt.

Das RFID-System wirkt dabei mit einem Schreib-Lesegerät derart zusammen, dass aus einem RFID-Chip Daten ausgelesen und mittels einer RFID-Antenne in das Schreib-Lesegerät übertragen werden können.

In dem RFID-Chip sind Identifikationsdaten gespeichert, anhand derer ein mit dem RFID-Chip gekennzeichnetes Objekt identifiziert werden kann.

Derartige Identifikationssysteme werden in zunehmendem Maße auch in Textilien eingesetzt, insbesondere in der Bekleidungsindustrie, oder auch im Bereich technischer Textilien.

In diesem Fall sind der RFID-Chip und die Sende- und/oder Empfangsantenne auf einem textilen Trägermaterial aufgedruckt, geätzt beziehungsweise gestickt.

Ein erstes Problem bei derartigen Systemen besteht darin, dass das Aufbringen von Sende- und/oder Empfangsantennen auf dem textilen Trägermaterial sehr zeitaufwändig ist.

Ein zweites Problem besteht darin, die Sende- und/oder Empfangsantenne so auszubilden, dass mit diesen die erforderlichen Reichweiten bei der Datenübertragung mit dem Schreib-Lesegerät realisiert werden können.

Der Erfindung liegt die Aufgabe zugrunde, ein RFID-System bereitzustellen, welches rationell herstellbar ist und dabei eine hohe Funktionalität aufweist.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen beschrieben.

Die Erfindung betrifft ein RFID-System mit einem RFID-Chip und einer Sende- und/oder Empfangsantenne zum Senden und/oder Empfangen von elektromagnetischen Wellen, welche auf einem Trägermaterial aufgebracht sind. Die Sende- und/oder Empfangsantenne ist nur von einem elektrisch leitfähigen Faden gebildet, welcher eine linienförmige, kreuzungsfreie Struktur ausbildet. Ein Segment des elektrisch leitfähigen Fadens umschlingt den RFID-Chip berührungsfrei in einem Winkel von mindestens 180°, wodurch eine kapazitive Kopplung zwischen dem RFID-Chip und der Sende- und/oder Empfangsantenne bewirkt ist.

Die Erfindung betrifft auch ein entsprechendes Verfahren.

Ein wesentlicher Vorteil der Erfindung besteht darin, dass mit der dem RFID-Chip zugeordneten Sende- und/oder Empfangsantenne sehr große Reichweiten, die typisch sogar mehrere Meter betragen können, für eine berührungslose Datenübertragung mit einer externen Einheit, insbesondere einem Schreib-Lesegerät, erzielt werden können.

Mit der Sende- und/oder Empfangsantenne können durch eine vorteilhafte Geometrie Reichweiten von mehr als 6 Metern erzielt werden, wobei über diese Reichweiten große Datenmengen übertragbar sind. Das ist insbesondere bei Applikationen wie der Anlieferung von Industriewäscheteilen in Containern von Interesse.

Diese hohe Reichweiten werden erfindungsgemäß mit einer sehr einfachen Antennenstruktur erzielt. Die erfindungsgemäße Sende- und/oder Empfangsantenne besteht nur aus einem linienförmig und kreuzungsfrei auf dem Trägermaterial geführten elektrisch leitfähigen Faden, wobei wesentlich ist, dass ein Segment dieses elektrisch leitfähigen Fadens so um den RFID-Chip herumgeführt ist, dass dieses Segment den RFID-Chip in einem Winkelbereich von wenigstens 180°, bevorzugt in einem Winkelbereich zwischen 180° und 270°, umschlingt. Typischerweise weist der RFID-Chip dabei eine zumindest näherungsweise kreisförmige Außenkontur auf. Da nur ein und nicht mehrere elektrisch leitfähige Fäden die Sende- und/oder Empfangsantenne bilden und der elektrisch leitfähige Faden auf dem Trägermaterial linienförmig und kreuzungsfrei geführt ist, kann der elektrisch leitfähige Faden den RFID-Chip nicht über den gesamten Umfang von 360° umschlingen, da keine geschlossene Schlaufe gebildet werden kann. Vielmehr bildet der elektrisch leitfähige Faden eine offene Schlaufe, die den elektrisch leitfähigen Faden nur über einen Teilbereich von 360° umschlingt, wobei der elektrisch leitfähige Faden linienförmig um den RFID-Chip geführt ist.

Um eine rein kapazitive Ankopplung der Sende- und/oder Empfangsantenne an den RFID-Chip zu gewährleisten, berührt die Sende- und/oder Empfangsantenne den RFID-Chip nicht, sondern ist in geringem, vorzugsweise etwa konstantem Abstand um den RFID-Chip herumgeführt.

Dabei muss jedoch die Bahn des den RFID-Chip umgebenden Segments nicht exakt an die Außenkontur des RFID-Chips angepasst sein.

Insbesondere kann das den RFID-Chip umschlingende Segment des elektrisch leitfähigen Fadens in Form eines Polygonzugs ausgebildet sein.

Derartige Geometrien lassen sich fertigungstechnisch besonders einfach realisieren.

Eine vorteilhafte Weiterbildung der Erfindung sieht vor, dass die Sende- und/ oder Empfangsantenne in Form einer Doppelantenne ausgebildet ist, welche zwei elektrisch leitfähige Fäden aufweist, die in konstantem Abstand zueinander verlaufen.

Damit lassen sich die Sende- beziehungsweise Empfangsleistungen der Sende- und/oder Empfangsantenne weiter erhöhen.

Diese Ausführung einer Doppelantenne kann derart ausgebildet sein, dass die elektrisch leitfähigen Fäden nicht im gesamten Bereich der Sende- und/oder Empfangsantenne parallel verlaufen. Vielmehr können in den äußeren Randbereichen der Sende- und/oder Empfangsantenne die beiden elektrisch leitfähigen Fäden eine mehrfach gekreuzte Struktur ausbilden, wobei die elektrisch leitfähigen Strukturen in den Kreuzungspunkten elektrisch kontaktiert sind. Durch die Ausbildung der gekreuzten Struktur kann der Frequenzbereich der Sende- und/ oder Empfangsantenne gezielt geändert werden.

Prinzipiell kann der elektrisch leitfähige Faden mittels einer Strickmaschine, insbesondere einer Flachstrickmaschine in das Trägermaterial eingearbeitet werden.

Weiterhin sind auch Wirkmaschinen zur Einarbeitung von Sende- und/oder Empfangsantennen in das Trägermaterial geeignet.

Besonders vorteilhaft wird zur Erzeugung der Sende- und/oder Empfangsantenne eine Kettenwirkmaschine oder eine Raschelmaschine, insbesondere eine Vliesraschelmaschine verwendet.

Mit derartigen Maschinen können die Sende- und/oder Empfangsantennen schnell und rationell in das Trägermaterial eingearbeitet werden, so dass ein wirtschaftlicher Herstellungsprozess der Sende- und/oder Empfangsantennen gewährleistet ist.

Ein weiterer Vorteil besteht darin, dass mit der Kettenwirkmaschine oder Raschelmaschine Sende- und/oder Empfangsantennen in nahezu beliebigen Formen und Geometrien hergestellt werden können, wobei insbesondere auch die Länge der Sende- und/oder Empfangsantenne, die den Frequenzbereich von zu sendenden oder zu empfangenden elektromagnetischen Wellen umgibt, flexibel vorgegeben werden kann.

Besonders vorteilhaft weist die Kettenwirkmaschine oder Raschelmaschine einen variablen Schusseintrag auf, mittels dessen die Länge einer Sende- und/oder Empfangsantenne vorgegeben wird.

Damit kann die Frequenz oder der Frequenzbereich der Sende- und/oder Empfangsantenne besonders einfach, rationell und exakt vorgegeben werden.

Gemäß einer vorteilhaften Ausgestaltung der Erfindung weist die Kettenwirkmaschine oder Raschelmaschine elektronische Legebarren auf, mittels derer die Position einer Sende- und/oder Empfangsantenne auf dem textilen Trägermaterial frei vorgegeben werden kann.

Die elektronischen Legebarren der Kettenwirkmaschine oder Raschelmaschine sind, im Gegensatz zu konventionellen Legebarren, nicht rapportgebunden, so dass mit diesen elektronischen Legebarren die Positionen der Sende- und/oder Empfangsantenne auf dem Trägermaterial ohne konstruktive Restriktionen frei vorgegeben werden können.

Die zur Herstellung der Sende- und/oder Empfangsantennen verwendeten elektrisch leitfähigen Fäden bestehen vollständig oder teilweise aus einem elektrisch leitfähigen Material.

Dabei können generell metallische und nicht metallische Materialien verwendet werden.

Gemäß einer vorteilhaften Ausgestaltung besteht der elektrisch leitfähige Faden aus einem Polymer-Edelstahl-Hybrid-Garn.

Das Trägermaterial bildet generell eine elektrisch isolierende Struktur, auf welcher die Sende- und/oder Empfangsantennen aufgebracht werden, das heißt das Trägermaterial besteht vollständig aus elektrisch nicht leitfähigen Materialien. Vorteilhaft ist ein textiles Trägermaterial vorgesehen.

Dabei kann das textile Trägermaterial ein Gewebe, Gewirk, Vlies, Gelege oder Geflecht sein.

Zweckmäßig werden die die Sende- und/oder Empfangsantennen bildenden elektrisch leitfähigen Fäden mittels elektrisch isolierenden Bindefäden an dem textilen Trägermaterial fixiert.

Besonders vorteilhaft werden die Bindefäden mittels wenigstens einer Legebarre der Kettenwirkmaschine oder Raschelmaschine auf dem textilen Trägermaterial aufgebracht.

Damit können mit derselben Kettenwirkmaschine oder Raschelmaschine, mit der die elektrisch leitfähigen Fäden zur Ausbildung der Sende- und/oder Empfangsantenne in das textile Trägermaterial eingearbeitet werden, auch die Bindefäden zur Fixierung der Sende- und/oder Empfangsantenne eingearbeitet werden, wobei das Einbringen der elektrisch leitfähigen Fäden in das Trägermaterial und deren Fixierung mit den Bindefäden in einem Arbeitsprozess erfolgen kann, wodurch ein hoher Rationalisierungseffekt erzielt wird.

Vorteilhaft wird dabei die Dichte der Bindefäden abhängig von der geometrischen Struktur der Sende- und/oder Empfangsantenne variiert.

Damit wird ein besonders guter Halt der Sende- und/oder Empfangsantenne am Trägermaterial bei gleichzeitig geringem Materialeinsatz von Bindefäden erzielt.

In den Bereichen starker Krümmungen der Sende- und/oder Empfangsantenne ist die Dichte von Bindefäden größer als in Bereichen geringerer Krümmung, da in den Bereichen großer Krümmung der Sende- und/oder Empfangsantenne mehr Bindefäden per Längeneinheit erforderlich sind, um diese stark gekrümmte Struktur sicher zu fixieren.

Die erfindungsgemäßen textilen Trägermaterialien mit dem dort aufgebrachten RFID-System können für eine Vielzahl unterschiedlicher Applikationen eingesetzt werden.

Das RFID-System kann Bestandteil eines Identifikationssystems sein. In diesem Fall sind im RFID-Chip Identifikationsdaten für eine Objektidentifikation gespeichert. Diese Identifikationsdaten können mit einem Schreib-Lesegerät einbeziehungsweise ausgegeben werden.

Weiterhin kann ein derartiges RFID-System Bestandteil eines Überwachungssystems sein. Beispielsweise können Sensorsignale von zu Überwachungszwecken eingesetzten Sensoren im RFID-Chip gespeichert und von dem Schreib-Lesegerät zu Kontrollzwecken ausgelesen werden.

Ein Beispiel für ein solches Überwachungssystem ist eine Plane, in welche über deren gesamte Fläche leitfähige Sensorstrukturen eingearbeitet sind. Bei einer Manipulation, insbesondere einem Durchstoßen der leitfähigen Strukturen gen, generieren diese Sensorsignale, die mit dem RFID-Chip an das Schreib-Lesegerät übertragen werden können. Mit derartigen Planen können zu schützende Objekte sicher verpackt werden.

Die Erfindung wird im Folgenden anhand der Zeichnungen erläutert. Es zeigen:
- Figur 1:: Erstes Ausführungsbeispiel des erfindungsgemäßen RFID-Systems.
- Figur 1a:: Vergrößerte Detaildarstellung der Anordnung gemäß Figur 1.
- Figur 2:: Zweites Ausführungsbeispiel des erfindungsgemäßen RFID-Systems.
- Figur 3:: Drittes Ausführungsbeispiel des erfindungsgemäßen RFID-Systems.
- Figur 4:: Variante der Ausführungsform gemäß Figur 3.

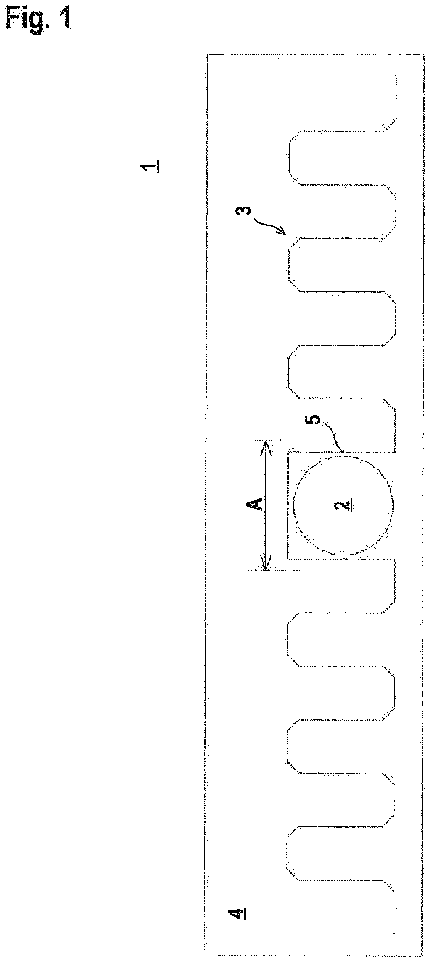

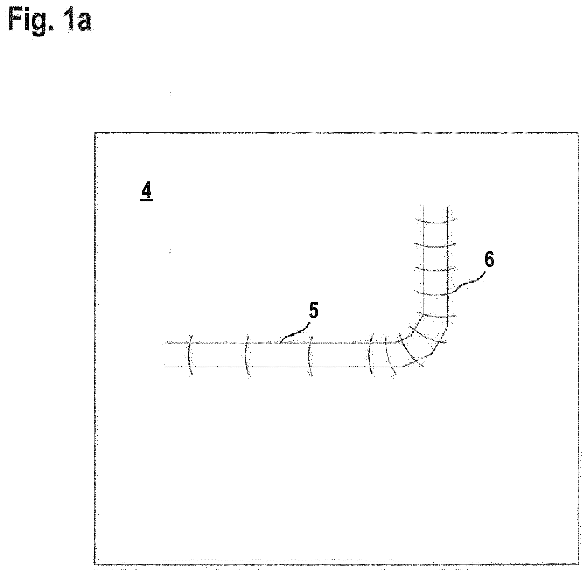

Figur 1 zeigt ein erstes Ausführungsbeispiel des erfindungsgemäßen RFID-Systems 1 mit einem RFID-Chip 2 und einer Sende- und/oder Empfangsantenne 3, die auf einem textilen Trägermaterial 4 aufgedruckt sind.

Das textile Trägermaterial 4 besteht aus elektrisch nicht leitfähigen Materialien, das heißt aus elektrisch isolierenden Garnen oder Fäden.

Dabei kann das textile Trägermaterial 4 ein Gewebe, Gewirk, Vlies, Gelege oder Geflecht sein.

Die Sende- und/oder Empfangsantenne 3, die auf das textile Trägermaterial 4 aufgebracht ist, dient generell zum Senden und/oder Empfangen von elektromagnetischen Wellen.

Mit der Sende- und/oder Empfangsantenne 3 können im RFID-Chip 2 gespeicherte Daten an eine externe Einheit, insbesondere ein Schreib-Lesegerät ausgegeben werden. Weiterhin können Daten von dem Schreib-Lesegerät an den RFID-Chip 2 eingelesen und in diesem gespeichert werden.

Der RFID-Chip 2 ist im vorliegenden Fall in Form eines flachen, kreisscheibenförmigen Körpers ausgebildet, der auf das textile Trägermaterial 4 aufgeklebt ist.

Die Sende- und/oder Empfangsantenne 3 besteht aus einem elektrisch leitfähigen Faden 5, der insbesondere von einem Polymer-Edelstahl-Hybrid-Garn gebildet ist.

Prinzipiell kann der elektrisch leitfähige Faden 5 mittels einer Strickmaschine, insbesondere einer Flachstrickmaschine in das Trägermaterial 4 eingearbeitet sein.

Vorteilhaft ist der elektrisch leitfähige Faden 5 mit einer Wirkmaschine, besonders vorteilhaft mit einer Kettenwirkmaschine oder einer Raschelmaschine, in das textile Trägermaterial 4 eingearbeitet.

Im vorliegenden Fall wird zur Herstellung der Sende- und/oder Empfangsantenne 3 eine Vliesraschelmaschine verwendet.

Diese Vliesraschelmaschine weist einen variablen Schusseintrag auf, mit der die Länge der Sende- und/oder Empfangsantenne 3 gezielt und genau vorgegeben werden kann. Mit der Länge der Sende- und/oder Empfangsantenne 3 wird der Frequenzbereich vorgegeben, innerhalb dessen die Sende- und/oder Empfangsantenne 3 elektromagnetische Wellen senden und/oder empfangen kann.

Weiterhin weist die Vliesraschelmaschine elektrische Legebarren auf, die nicht rapportgebunden sind. Damit kann die Position der Sende- und/oder Empfangsantenne 3 auf dem textilen Trägermaterial 4 frei vorgegeben werden.

Der die Sende- und/oder Empfangsantenne 3 bildende elektrisch leitfähige Faden 5 ist mittels Bindefäden 6 in dem textilen Trägermaterial 4 fixiert (Figur 1a). Die Bindefäden 6, die aus elektrisch nicht leitfähigen Materialien bestehen, sind mit wenigstens einer weiteren Legebarre der Vliesraschelmaschine eingearbeitet, so dass das Auftragen des die Sende- und/oder Empfangsantenne 3 bildenden elektrisch leitfähigen Fadens 5 und dessen Fixierung mit den Bindefäden 6 mit der Vliesraschelmaschine in einem Arbeitsprozess hergestellt werden können.

Wie aus Figur 1a ersichtlich, variiert die Dichte der Bindefäden 6 abhängig von der geometrischen Struktur der Sende- und/oder Empfangsantenne 3.

In den Bereichen großer Krümmungen der Sende- und/oder Empfangsantenne 3 ist eine große Anzahl von Bindefäden 6 pro Längeneinheit vorgesehen, um deren stark gekrümmten Abschnitte der Sende- und/oder Empfangsantenne 3 sicher und formstabil auf dem Trägermaterial 4 zu fixieren. In den Bereichen geringer Krümmung der Sende- und/oder Empfangsantenne 3 ist dagegen eine geringere Anzahl von Bindefäden 6 pro Längeneinheit vorgesehen.

Wie aus Figur 1 ersichtlich, bildet der elektrisch leitfähige Faden 5 eine linienförmige, kreuzungsfreie Struktur auf dem Trägermaterial 4. In dem Bereich A bildet ein Segment des elektrisch leitfähigen Fadens 5 eine Umschlingung des RFID-Chips 2 aus. Beiderseits dieses Bereichs A bildet der elektrisch leitfähige Faden 5 periodische wellenförmige Strukturen aus. Diese sind im vorliegenden Fall in Form von Polygonzügen ausgebildet, die sich mit einer Legebarre der Vliesraschelmaschine besonders einfach realisieren lassen.

Ebenso einfach kann mit einer Legebarre der Vliesraschelmaschine der Umschlingungsbereich des RFID-Chips 2 realisiert werden, wobei im vorliegenden Fall das Segment des elektrisch leitfähigen Fadens 5 im Bereich des RFID-Chips 2 entlang einer Rechteckkontur geführt ist. Dabei umschlingt das Segment des elektrisch leitfähigen Fadens 5 den RFID-Chip 2 in einem Winkelbereich, der größer oder gleich als 180°, jedoch kleiner als 360°, insbesondere kleiner als 270° ist. Wesentlich hierbei ist, dass kein direkter Kontakt zwischen elektrisch leitfähigem Faden 5 und RFID-Chip 2 gegeben ist, wodurch Kurzschlüsse vermieden werden. Durch diese Beabstandung wird eine rein kapazitive Ankopplung der Sende- und/oder Empfangsantenne 3 an den RFID-Chip 2 bewirkt.

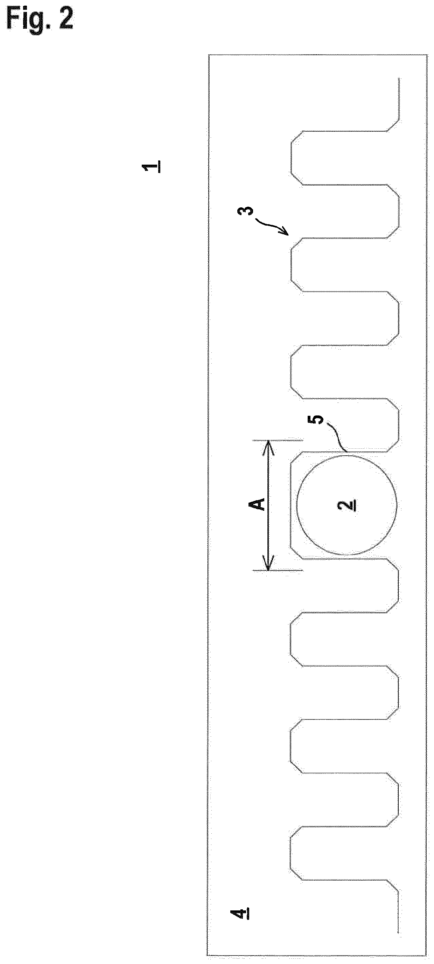

Figur 2 zeigt eine Variante der Ausführungsform gemäß Figur 1. Die Umführungsform der Figur 2 unterscheidet sich von der Ausführungsform gemäß Figur 1 nur dadurch, dass der elektrisch leitfähige Faden 5 im Bereich A der Umschlingung einen Polygonzug ausbildet.

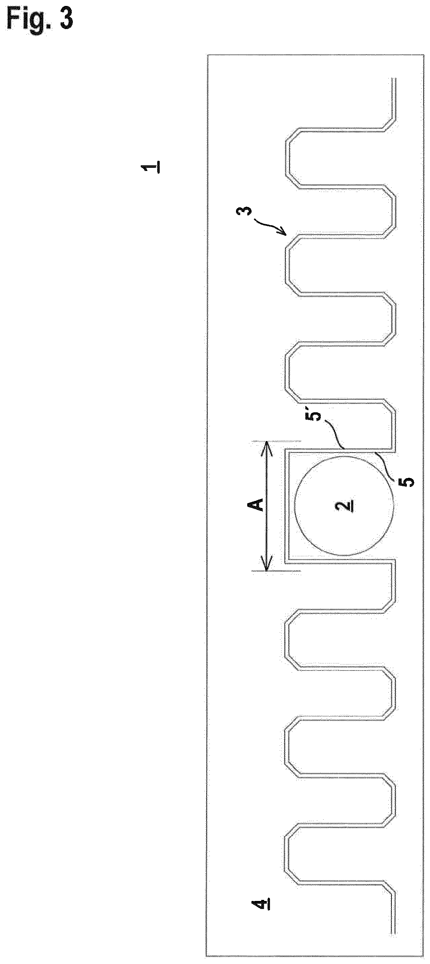

Figur 3 zeigt eine weitere Variante der Ausführungsform gemäß Figur 1. Die Ausführungsform gemäß Figur 3 unterscheidet sich von der Ausführungsform der Figur 1 nur dadurch, dass die Sende- und/oder Empfangsantenne 3 nicht nur von einem sondern von zwei elektrisch leitenden Fäden 5, 5' gebildet ist.

Die beiden elektrisch leitfähigen Fäden 5, 5' laufen etwa parallel in Abstand zueinander. Dementsprechend weisen die elektrisch leitfähigen Fäden 5, 5' einander entsprechende Konturen auf, wobei die elektrisch leitfähigen Fäden 5, 5' durch das textile Trägermaterial 4 voneinander elektrisch isoliert sind.

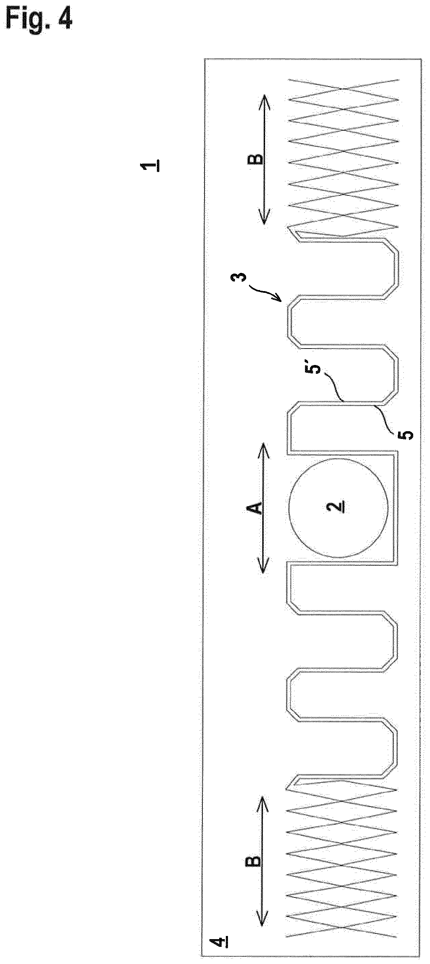

Figur 4 zeigt eine Variante der Ausführungsform gemäß Figur 3. Die Ausführungsform gemäß Figur 4 unterscheidet sich vom Beispiel gemäß Figur 3 nur dadurch, dass die beiden elektrisch leitfähigen Fäden 5, 5' nicht im gesamten Bereich der Sende- und/oder Empfangsantenne 3 parallel laufen. Vielmehr bilden die elektrisch leitfähigen Fäden 5, 5' in den äußeren Bereichen B eine mehrfach gekreuzte Struktur, wobei die elektrisch leitfähigen Fäden 5, 5' in den Kreuzungspunkten elektrisch kontaktiert sind. Mit diesen flächigen gekreuzten Strukturen der elektrisch leitfähigen Fäden 5, 5' kann der Frequenzbereich der Sende- und/oder Empfangsantenne 3 gegenüber der Ausführungsform gemäß Figur 3 gezielt geändert werden.

Die Bereiche B mit den gekreuzten elektrisch leitfähigen Fäden 5, 5' sind im vorliegenden Fall spiegelsymmetrisch ausgebildet. In jedem Fall liegen die Bereiche B außerhalb des Bereichs A mit dem RFID-Chip.

### Bezugszeichenliste

- (1): RFID-System
- (2): RFID-Chip
- (3): Sende- und/oder Empfangsantenne
- (4): Trägermaterial
- (5): Elektrisch leitfähiger Faden
- (5'): Elektrisch leitfähiger Faden
- (6): Bindefaden

- A: Bereich
- B: Äußerer Bereich

## Patentansprüche

1. RFID-System (1) mit einem RFID-Chip (2) und einer Sende- und/oder Empfangsantenne (3) zum Senden und/oder Empfangen von elektromagnetischen Wellen, welche auf einem Trägermaterial (4) aufgebracht sind, **dadurch gekennzeichnet, dass** die Sende- und/oder Empfangsantenne (3) nur von einem elektrisch leitfähigen Faden (5) gebildet ist, welcher eine linienförmige, kreuzungsfreie Struktur ausbildet, wobei ein Segment des elektrisch leitfähigen Fadens (5) den RFID-Chip (2) berührungsfrei in einem Winkel von mindestens 180° umschlingt, wodurch eine kapazitive Kopplung zwischen dem RFID-Chip (2) und der Sende- und/oder Empfangsantenne (3) bewirkt ist.

2. RFID-System (1) nach Anspruch 1, **dadurch gekennzeichnet, dass** der elektrisch leitfähige Faden (5) mittels einer Wirkmaschine, insbesondere einer Kettenwirkmaschine oder Raschelmaschine, in das Trägermaterial (4) eingearbeitet ist.

3. RFID-System (1) nach Anspruch 2, **dadurch gekennzeichnet, dass** der elektrisch leitfähige Faden (5) mittels einer Vliesraschelmaschine in das Trägermaterial (4) eingearbeitet ist.

4. RFID-System (1) nach einem der Ansprüche 2 oder 3, **dadurch gekennzeichnet, dass** die Kettenwirkmaschine oder Raschelmaschine einen variablen Schusseintrag aufweist, mittels dessen die Länge einer Sende- und/oder Empfangsantenne (3) vorgegeben werden kann.

5. RFID-System (1) nach einem der Ansprüche 2 bis 4, **dadurch gekennzeichnet, dass** die Kettenwirkmaschine oder Raschelmaschine elektronische Legebarren aufweist, mittels derer die Position einer Sende- und/oder Empfangsantenne (3) auf dem Trägermaterial (4) frei vorgegeben werden kann.

6. RFID-System (1) nach einem der Ansprüche 1 bis 5, **dadurch gekennzeichnet, dass** der die Sende- und/oder Empfangsantenne (3) bildende elektrisch leitfähige Faden (5) mittels elektrisch isolierenden Bindefäden (6) an dem Trägermaterial (4) fixiert ist.

7. RFID-System (1) nach Anspruch 6, **dadurch gekennzeichnet, dass** die Bindefäden (6) mittels wenigstens einer Legebarre der Kettenwirkmaschine oder Raschelmaschine auf dem Trägermaterial (4) aufgebracht sind, wobei die Dichte der Bindefäden (6) abhängig von der geometrischen Struktur der Sende- und/oder Empfangsantenne (3) variiert werden kann.

8. RFID-System (1) nach Anspruch 1, **dadurch gekennzeichnet, dass** der elektrisch leitfähige Faden (5) mittels einer Strickmaschine, insbesondere einer Flachstrickmaschine in das Trägermaterial (4) eingearbeitet ist.

9. RFID-System (1) nach einem der Ansprüche 1 - 8, **dadurch gekennzeichnet, dass** ein elektrisch isolierendes, insbesondere textiles Trägermaterial (4) vorgesehen ist.

10. RFID-System (1) nach einem der Ansprüche 1 - 9, **dadurch gekennzeichnet, dass** der elektrisch leitfähige Faden (5) aus einem Polymer-Edelstahl-Hybrid-Garn besteht.

11. RFID-System (1) nach einem der Ansprüche 1 - 10, **dadurch gekennzeichnet, dass** das Segment des elektrisch leitfähigen Fadens (5) den RFID-Chip (2) in einem Winkelbereich von 180° bis 270° umschlingt.

12. RFID-System (1) nach Anspruch 11, **dadurch gekennzeichnet, dass** das den RFID-Chip (2) umschlingende Segment des elektrisch leitfähigen Fadens (5) in Form eines Polygonzugs ausgebildet ist.

13. RFID-System (1) nach einem der Ansprüche 1 - 3, **dadurch gekennzeichnet, dass** die Sende- und/oder Empfangsantenne (3) in Form einer Doppelantenne ausgebildet ist, welche zwei elektrisch leitfähige Fäden (5, 5') aufweist, die in konstantem Abstand zueinander verlaufen.

14. RFID-System (1) nach Anspruch 13, **dadurch gekennzeichnet, dass** die Doppelantenne in ihren äußeren Randbereichen eine mehrfach gekreuzte Struktur der beiden leitfähigen Fäden (5, 5') aufweist.

15. Verfahren zur Herstellung eines RFID-Systems (1) mit einem RFID-Chip (2) und einer Sende- und/oder Empfangsantenne (3) zum Senden und/oder Empfangen von elektromagnetischen Wellen, wobei der RFID-Chip (2) und die Sende- und/oder Empfangsantenne (3) auf einem Trägermaterial (4) aufgebracht werden, **dadurch gekennzeichnet, dass** die Sende- und/ oder Empfangsantenne (3) nur von einem elektrisch leitfähigen Faden (5) gebildet ist, welcher eine linienförmige, kreuzungsfreie Struktur ausbildet, wobei ein Segment des elektrisch leitfähigen Fadens (5) den RFID-Chip (2) berührungsfrei in einem Winkel von mindestens 180° umschlingt, wodurch eine kapazitive Kopplung zwischen dem RFID-Chip (2) und der Sende- und/oder Empfangsantenne (3) bewirkt wird.
